# EUROPÄISCHE PATENTANMELDUNG

(11) **EP 3 961 880 A1**
(43) Veröffentlichungstag der Anmeldung: **02.03.2022**
(21) Anmeldenummer: 20193655.6
(22) Anmeldetag: 31.08.2020
(51) Int. Cl.: H02K 17/16, H02K 15/00, B33Y 80/00

(54) **AKTIVTEIL EINER ELEKTRISCHEN MASCHINE MIT GEDRUCKTEM LEITER**

(71) Anmelder: Siemens Aktiengesellschaft, 80333 München (DE)
(72) Erfinder: Brach, Karsten, 13589 Berlin (DE); Jensen, Jens Dahl, 14050 Berlin (DE); Rauch, Hartmut, 12203 Berlin (DE); Schneck, Jakob, 10245 Berlin (DE); Stier, Oliver, 12163 Berlin (DE)

(57) **Zusammenfassung**

Ein Aktivteil (1) einer elektrischen Maschine (10), weist elektrische Leiter (3,3',3",3"') auf, wobei die elektrischen Leiter (3,3',3",3"') gedruckt sind, wobei zwischen den elektrischen Leitern (3,3',3",3"') ein Zwischenkörper (4,4',4",4"') ist. Bei einem Verfahren zur Herstellung eines Aktivteils (1) einer elektrischen Maschine, werden elektrische Leiter (3,3',3",3"') gedruckt, wobei zwischen elektrischen Leitern (3,3',3",3"') ein Zwischenkörper (4,4',4",4"') gedruckt wird, wobei zwischen dem Druck zumindest eines elektrischen Leiters (3,3',3",3"') und eines Zwischenkörper (4,4',4",4"') abgewechselt wird.

## Beschreibung

Die Erfindung betrifft einen Aktivteil einer elektrischen Maschine und ein Verfahren zur Herstellung dessen.

Eine elektrische Maschine weist einen Stator und einen Rotor auf. Ist die elektrische Maschine eine Asynchronmaschine, ist im Betrieb der elektrischen Maschine sowohl der Stator wie auch der Rotor bestromt. Damit ist der Rotor auch ein Aktivteil der elektrischen Maschine, da dieser einen Kurzschlusskäfig aufweist, welcher Leiter aufweist, durch welchen im Betrieb der elektrischen Maschine elektrischer Strom fließt.

Der Rotor der elektrischen Maschine, also das Aktivteil der Asynchronmaschine welches sich im Betrieb dreht, ist im Betrieb Fliehkräften ausgesetzt. Leiter des Aktivteils, also insbesondere Leiter des Kurzschlusskäfigs sind so auszuführen bzw. zu konstruieren, dass diese den Fliehkräften standhalten. Ein spezifisches Problem besteht beispielsweise darin, eine Verbindung (bspw. zur Herstellung von Komponenten für elektrische Maschinen, wie zum Beispiel dem Rotor einer Asynchronmaschine als deren Aktivteil) unter Verwendung unterschiedlicher Materialien (bspw. Kuper / Eisen oder Kupfer / Stahl oder Eisen / Stahl) stabil auszuführen. Dies gelingt beispielsweise durch stoffschlüssige Verbindungen. Eine solche stoffschlüssige Verbindung wurde bisher bspw. für Käfigläufer von Asynchronmaschinen gefertigt. Diese Läufer erfordern kurzgeschlossene Rotorwicklungen, um ihre Funktion zu erfüllen. Der bestromte Stator induziert im Rotor Ströme, die mit dem Feld des Stators ein Drehmoment bewirken und so eine Last antreiben. Bei Hochdrehzahlantrieben ist der Rotor, aus Gründen der mechanischen Festigkeit, aus massivem, hochfestem Stahl mit integrierter Kurzschluss-Rotorwicklung. Zur Integration der Rotorwicklung werden zunächst Nuten für die Stäbe bzw. die Ringsegmente der Wicklung in den massiven Rotorballen gefräst bzw. gedreht und dort anschließend massive, vernickelte Kupferstäbe/-ringsegmente eingefügt. Durch die anschließende Anwendung eines isostatischen Heißpressverfahrens (HIP: Hot Isostatic Pressing) entsteht eine Diffusionszone zwischen dem Kupfer der Stäbe und dem Nickel der Beschichtung, sowie zwischen dem Nickel der Beschichtung und dem Stahl des massiven Rotors. Diese hochfeste Verbindung ist notwendig, um den Fliehkraft-Beanspruchungen bei höchsten Drehzahlen Stand zu halten. Der HIP-Prozess erfordert hohe Temperaturen und Drücke. Das beschriebene Verfahren ist sehr aufwendig und teuer.

Eine Aufgabe der Erfindung ist es ein Aktivteil der elektrischen Maschine, insbesondere einen Rotor der elektrischen Maschine einfach und stabil auszuführen. Damit soll erreicht werden, dass das Aktivteil bei Rotation nicht zerstört wird.

Eine Lösung der Aufgabe ergibt sich bei einem Aktivteil nach Anspruch 1. Eine weitere Lösung der Aufgabe ergibt sich bei einem Verfahren nach Anspruch 8. weitere Ausgestaltungen ergeben sich gemäß der Ansprüche 2 bis 7 und 9 bis 12.

Ein Aktivteil einer elektrischen Maschine, welches elektrische Leiter aufweist, weist elektrische Leiter auf, welche gedruckt sind. Das Aktivteil der elektrischen Maschine ist insbesondere ein Rotor der elektrischen Maschine. Die elektrische Maschine ist insbesondere eine Asynchronmaschine. Der gedruckte elektrische Leiter ist insbesondere ein Leiter eines Kurzschlusskäfigs der Asynchronmaschine. Zwischen den gedruckten elektrischen Leiter befindet sich ein Zwischenkörper. Die Zwischenkörper weisen eine zu den elektrischen Leitern unterschiedliche und geringere elektrische Leitfähigkeit auf. Durch das Drucken der elektrischen Leiter kann eine feste Verbindung hergestellt werden. Die gedruckten elektrischen Leiter weisen eine Längsausrichtung parallel zur Rotationsachse des Rotors auf. Zum gedruckten elektrischen Leiter kann beispielsweise Kupfer und/oder Aluminium verwendet werden.

In einer Ausgestaltung des Aktivteils sind elektrische Leiter gedruckt wie auch Zwischenkörper zwischen den elektrischen Leitern. Auch dies erhöht die Festigkeit.

In einer Ausgestaltung des Aktivteils sind die elektrischen Leiter symmetrisch über den Umfang des Rotors (Aktivteil) positioniert.

In einer Ausgestaltung des Aktivteils weist zumindest einer der elektrischen Leiter in einem Abschnitt einen Querschnitt auf, welcher sich mit zunehmendem Radius verjüngt. Der Radius betrifft dabei die Rotationsachse des Aktivteils (Rotors). Verjüngt sich der Querschnitt radial nach außen kann der gedruckte elektrische Leiter doch angrenzende Zwischenkörper gehalten werden. Dies ergibt sich aus der geometrischen Form, wenn sich die Zwischenkörper in Umfangsrichtung jeweils an die elektrischen Leiter mittelbar oder unmittelbar anschließend. Ein mittelbares Anschließen ergibt sich beispielsweise dadurch, wenn sich zwischen den elektrischen Leiter und dem Zwischenkörper noch eine Zwischenschicht befindet. Dies ist beispielsweise aus einem Material, welches Mittel aufweist. Die Zwischenkörper sind beispielsweise aus einem Material, welches Stahl und/oder Eisen aufweist. Verjüngt sich der Querschnitt eines gedruckten elektrischen Leiters, so verjüngt sich dieser insbesondere in einer Tangentialrichtung. Der Querschnitt ergibt sich aus einer stirnseitigen Sicht auf die elektrischen Leiter bzw. die Zwischenkörper.

In einer Ausgestaltung des Aktivteils nimmt der Querschnitt in seiner Tangentialausdehnung radial nach außen abwechselnd zu und ab bzw. ab und zu. Dies trifft ebenso den Querschnitt bezüglich der tangentialen Ausdehnung der Zwischenkörper. Dabei ergibt es sich in einer Ausgestaltung, dass dort, wo sich der Querschnitt des gedruckten elektrischen Leiters in einer radialen Richtung verjüngt sich in entsprechender Weise der Querschnitt des Zwischenkörpers vergrößert und umgekehrt. Damit ergibt sich insbesondere eine Verzahnung von elektrischen Leitern und Zwischenkörpern, wobei auch die Zwischenkörper gedruckt ausgeführt sein können.

In einer Ausgestaltung des Aktivteils ist in dieses folglich derart ausführbar, dass zumindest einer der elektrischen Leiter eine Vielzahl von Abschnitten mit Querschnitten aufweist, welche sich mit zunehmendem Radius verjüngen. Dabei entsprechen die Abschnitte beispielsweise zumindest teilweise Abschnitte eines Drucks der elektrischen Leiter, wobei die elektrischen Leiter abwechselnd zu den Zwischenkörper radial zunehmend aufgedruckt werden.

In einer Ausgestaltung des Aktivteils ist zwischen zumindest einem der gedruckten elektrischen Leiter und dem gedruckten Zwischenkörper eine dreidimensionale Struktur ausgebildet. Diese dreidimensionale Struktur ist beispielsweise im Querschnitt gezackt oder gewellt. So ergibt sich eine Formpassung zwischen den Zwischenkörper und den elektrischen Leitern sodass diese besser in Position gehalten werden können, auch wenn Kräfte radial nach Außen auf diese wirken.

In einer Ausgestaltung des Aktivteils weist die dreidimensionale Struktur in einem Querschnitt also ein Zackenmuster oder ein Wellenmuster auf.

In einer Ausgestaltung des Aktivteils differiert die elektrische Leitfähigkeit der elektrischen Leiter radial. Die elektrische Leitfähigkeit ist insbesondere in Bereichen größer, welche einen größeren Radius, d. h. einen größeren Abstand von der Rotationsachse, aufweisen. So kann der Widerstand der elektrischen Leiter eingestellt werden und auch der Skinneffekt berücksichtigt werden. Beispielsweise kann auch die elektrische Leitfähigkeit radial nach außen abnehmen.

In einer Ausgestaltung des Aktivteils weisen die elektrischen Leiter und/oder die insbesondere gedruckten Zwischenkörper zwischen zwei der elektrischen Leiter, Schichten auf, welche radial dort enden bzw. beginnen, an welchen die Dicke eines der elektrischen Leiters, bzw. Zwischenkörpers ein lokales Minimum oder Maximum aufweist. Die Schichtung ergibt sich daraus, dass die elektrischen Leiter bzw. die Zwischenkörper radial nach außen schichtweise aufgedruckt werden. Die radiale Dicke der elektrischen Leiter und der Zwischenkörper vergrößert sich also alternierend (abwechselnd). Damit ist es möglich die Wellenform bzw. die Zackenform herzustellen, welche zusätzlichen Halt gibt.

In einem Verfahren zur Herstellung eines Aktivteils, insbesondere eines Rotors mit einem Kurzschlusskäfig, einer elektrischen Maschine, werden die elektrische Leiter gedruckt, wobei zwischen elektrischen Leitern ein Zwischenkörper gedruckt wird, wobei zwischen dem Druck zumindest eines elektrischen Leiters und eines Zwischenkörper abgewechselt wird. So ergibt sich ein schichtweiser Aufbau von elektrischen Leitern bzw. Zwischenkörper. Der Kurzschlusskäfig des Aktivteils (Rotors) der Asynchronmaschine ist insbesondere additiv so zu fertigen, dass eine stoffschlüssige Verbindung zwischen den Materialien entsteht. Der Stoffschluss ist notwendig, um hohe Festigkeiten im Interface der Verbindung, und somit zwischen den Stoffen, gewähren zu können. Dies gelingt beispielsweise mittels eines Kaltgasspritzverfahrens. Mittels des Kaltgasspritzverfahrens lässt sich elektrisch leitendes Material wie Kupfer oder Aluminium aber auch magnetisierbares Material wie Eisen drucken. Der Kurzschlusskäfig der Asynchronmaschine kann also teilweise oder vollständig mittels eines additiven Druckverfahrens wie das "Kaltgasspritzen" hergestellt werden. Dazu wird der Leiterwerkstoff (bspw. Kupfer oder Aluminium) für die Wicklung und ein weichmagnetischer Werkstoff (bspw. FeSi2,9) für die Zähne schichtweise so auf eine Welle gedruckt, dass die Leiter und die Zähle parallel aufgebaut werden. Zusätzlich wird zum Beispiel parallel dazu zwischen Leiter-, Zahn- und Wellenwerkstoff eine im Vergleich sehr dünne Schicht (<= 300 µm) eines dritten Materials bspw. Nickel gedruckt. Diese zusätzliche Schicht (auch Diffusionsschicht genannt) dient der Ausbildung einer Diffusionszone. Die Diffusionszone erhöht die Bindung zwischen den angrenzenden Materialien. Der Zahn ist ein Beispiel für einen Zwischenkörper zwischen den elektrischen Leitern, welche kurzgeschlossene Wicklungen ausbilden. In einer möglichen anschließenden Wärmebehandlung (bspw. 6h bei 400°C) bildet sich dann insbesondere zwischen Leiterwerkstoff und Diffusionsschicht, zwischen Diffusionsschicht und weichmagnetischem Werkstoff sowie zwischen Diffusionsschicht und Stahl des massiven Rotors eine Diffusionszone und somit eine hochfeste Verbindung zwischen den unterschiedlichen Werkstoffen aus. Ggf. kann es aus prozesstechnischen- und / oder Genauigkeitsgründen notwendig sein, zwischen den additiv aufgebauten Werkstoffen eine subtraktive Zwischenbearbeitung durchzuführen. Das beschriebene Verfahren bzw. die beschriebenen Verfahren sind nicht ausschließlich auf Asynchronmaschinen mit massiven Rotoren beschränkt. Rotoren können beispielsweise auch Teil massiv ausgebildet werden.

In einer Ausgestaltung des Verfahrens wird in einem Verfahrensschritt ein erster elektrischer Leiter und ein zweiter benachbarter elektrischer Leiter gedruckt, wobei deren Breite abnimmt, wobei in einem nachfolgenden Verfahrensschritt der Zwischenkörper zwischen dem ersten elektrischen Leiter und dem zweiten elektrischen Leiter gedruckt wird, wobei dessen Breite zunimmt. So ergeben sich unterschiedliche Dicken der Querschnitte der gedruckten Elemente.

In einer Ausgestaltung des Verfahrens sind die elektrischen Leiter und/oder die Zwischenkörper auf eine Wellenkörper gedruckt. Diese ist insbesondere derart massiv aufgebaut, dass er von auftretenden Fliehkräften unbeeinflusst ist.

In einer Ausgestaltung des Verfahrens wird zwischen einem Druck zumindest eines Teils eines der elektrischen Leiter, welche ein erster Druckgegenstand sind und dem Druck zumindest eines Teils der Zwischenkörper, welche ein zweiter Druckgegenstand sind, derart abgewechselt, dass sich vor einem Wechsel ein radialer Dickenzuwachs des elektrischen Leiters oder des Zwischenkörpers ergibt der zwischen größer gleich 50 % und kleiner gleich 200 % des darauf folgenden radialen Dickenzuwachses des jeweils anderen Druckgegenstandes ist.

Die beschriebene Methode birgt eine Vereinfachung der Fertigung und eine deutliche Erhöhung des Automatisierungsgrads (>80% möglich) gegenüber dem bestehenden Füge-/HIP-Verfahren. Darüber hinaus impliziert sie die Möglichkeit individuelle Läufergeometrie, angepasst auf spezielle Anforderungen des Kunden (Rotorstab-Geometrien) zu realisieren, die mit herkömmlichen Methoden nicht oder nur mit äußerst hohem Aufwand fertigbar sind. Zudem können einem Rotorstab, also einem elektrischen Leiter des Aktivteils, lokal besondere elektrische Materialeigenschaften, wie z.B. unterschiedliche elektrische Leitfähigkeiten gegeben werden.

Im Folgenden wird die Erfindung beispielhaft anhand von Figuren näher dargestellt und erläutert. Die in den Figuren gezeigten Merkmale können auch zu neuen Ausführungsformen kombiniert werden, ohne die Erfindung zu verlassen. Gleiche Bezugszeichen bezeichnen gleichartige Elemente. Es zeigen:
- FIG 1: eine elektrische Maschine;
- FIG 2: Nuten;
- FIG 3: Nutenformen;
- FIG 4: eine erste Form von gedruckten elektrischen Leitern;
- FIG 5: eine zweite Form von gedruckten elektrischen Leitern.
- FIG 6 bis FIG 9: eine erste Abfolge eines Druckvorgangs und
- FIG 10 bis FIG 13: eine zweite Abfolge eines Druckvorgangs.

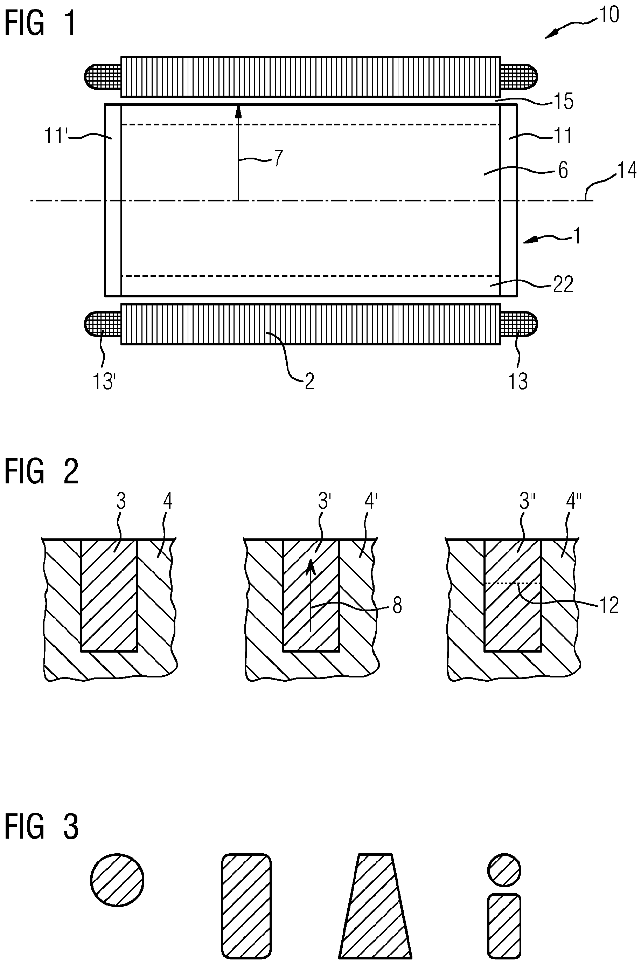

Die Darstellung nach Figur 1 zeigt eine elektrische Maschine 10, welche ein Aktivteil 1 und einen Stator 2 aufweist. In der vorliegenden Figur ist das Aktivteil 1 ein Rotor der elektrischen Maschine 10. In einer anderen Darstellung kann der Rotor als erstes Aktivteil und der Stator als zweites Aktivteil bezeichnet werden. Der Stator 2 weist Wicklungen mit Wickelköpfen 13 auf. Der Rotor, also im vorliegenden Beispiel das Aktivteil 1, ist ein Käfigläufer. Zwischen dem Stator und dem Rotor befindet sich ein Luftspalt 15. Das Aktivteil 1 weist einen ersten Kurzschlussring 11 und einen zweiten Kurzschlussring 11*'*. Das Aktivteil 1 ist um eine Rotationsachse 14 drehbar gelagert. Der Kurzschlusskäfig weist elektrische Leiter auf, welche in einer Druckschicht 22 liegen. Die elektrischen Leiter sind auf einen Wellenkörper 6 gedruckt. Das Aktivteil 1 weist eine radiale Ausdehnung mit dem Radius 7 auf. Die Druckschicht 22 befindet sich in einem radial äußeren Bereich des Aktivteils 1. Die elektrischen Leiter des Kurzschlusskäfigs sind in Figur 1 nicht explizit gezeigt, verlaufen aber in einer axialen Richtung in etwa parallel zur Rotationsachse 14.

Die Darstellung nach Figur 2 zeigt verschiedene Ausgestaltungen von elektrischen Leitern 3,3*'*,3*"* in Nuten. Figur 2 zeigt einen elektrischen Leiter 3, mit einer konstanten Kupferlegierung. Dies ist für einen Anlauf der elektrischen Maschine ohne besondere Anforderungen geeignet. Figur 2 zeigt auch einen elektrischen Leiter 3*'* bei welchen durch einen Pfeil 8 angedeutet ist, dass sich radial nach außen die Leitfähigkeit reduziert. Dies ist beispielsweise durch eine Legierung mit CuSi erreichbar. Höhere Leitfähigkeiten sind beispielsweise durch eine Legierung E-Cu erzielbar. Mit einer Änderung der Leitfähigkeit kann auf erhöhte Anforderungen bezüglich des Anlaufes der elektrischen Maschine reagiert werden. Der Übergang der Legierung muss nicht zwingend stetig sein. Möglich ist beispielsweise auch eine sprunghafte Änderung der Leitfähigkeit, wie dies im elektrischen Leiter 3*"* durch die gepunktete Linie 12 symbolisiert ist.

Die Darstellung nach Figur 3 zeigt verschiedene Querschnittsformen elektrischer Leiter. In Figur 2 ist ein rechteckiger Querschnitt gewählt. In Figur 3 sind von links nach rechts folgende Querschnitte dargestellt: Rundstab-Querschnitt, Hochstab-Querschnitt, Keilstab-Querschnitt und Doppelstab-Querschnitt mit Anlauf- und Betriebskäfig. Mit dem Coldspray Verfahren lassen sich unterschiedliche Standard Stabformen mit lokal unterschiedlicher elektrischer Leitfähigkeit realisieren.

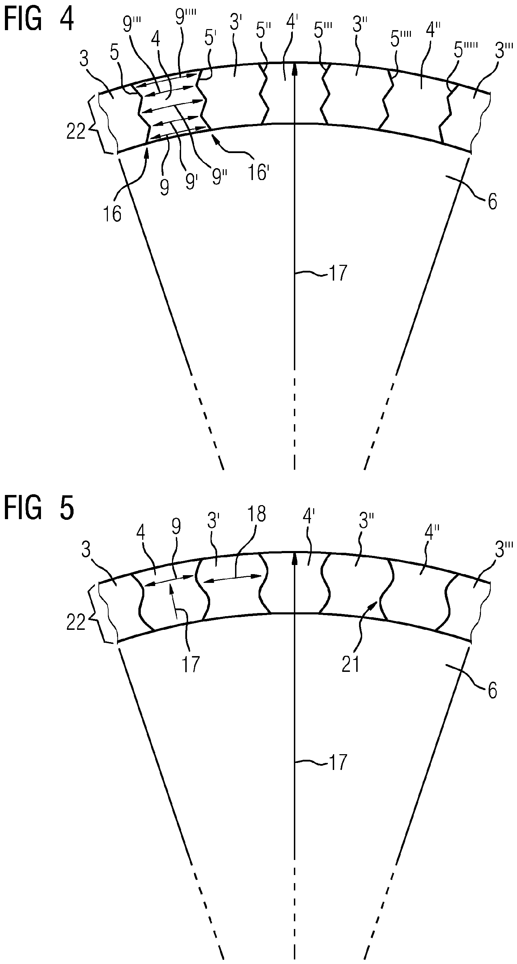

Die Darstellung nach Figur 4 zeigt in einem Tortenstück artigen Ausschnitt des Aktivteils in einem stirnseitigen Querschnitt die Positionierung der elektrischen Leiter und Zwischenstücke. Zwischen den elektrischen Leitern 3,3*'*,3*"*,3*'''* befinden sich die Zwischenkörper 4,4*'*,4*"*,4*'''*. Die elektrischen Leiter weisen insbesondere Kupfer auf. Die Zwischenkörper weisen insbesondere Eisen und/oder Stahl auf. Beide sind gedruckt. Zwischen den elektrischen Leitern und den Zwischenkörper befinden sich Kontaktschichten 5,5*'*,5*"*,5*'''*, welche insbesondere Nickel aufweisen. Die Kontaktschichten weisen ein Zackenmuster 16,16*'* auf. Die elektrischen Leiter und die Zwischenkörper sind auf einem Wellenkörper gedruckt. Gedruckt wird von Innen nach Außen, was durch die radiale Richtung 17 verdeutlicht ist. Nach außen wechselt die Breite 9,9*'*,9*"*,9*'''* der elektrischen Leiter in Umfangsrichtung. Alternierend dazu ändert sich auch die Breite der Zwischenkörper in gleicher radialer Position. Durch die Zackenform ergibt sich innerhalb einer Druckschicht 22 ein besonders guter Halt.

Die Darstellung gemäß Figur 5 zeigt in ähnlicher Weise wie Figur 4 den Querschnitt eines Ausschnitts eines Aktivteils, wobei der Grenzbereich zwischen den elektrischen Leitern und den Zwischenkörper nicht gezeigt ist, sondern wellenförmig verläuft.

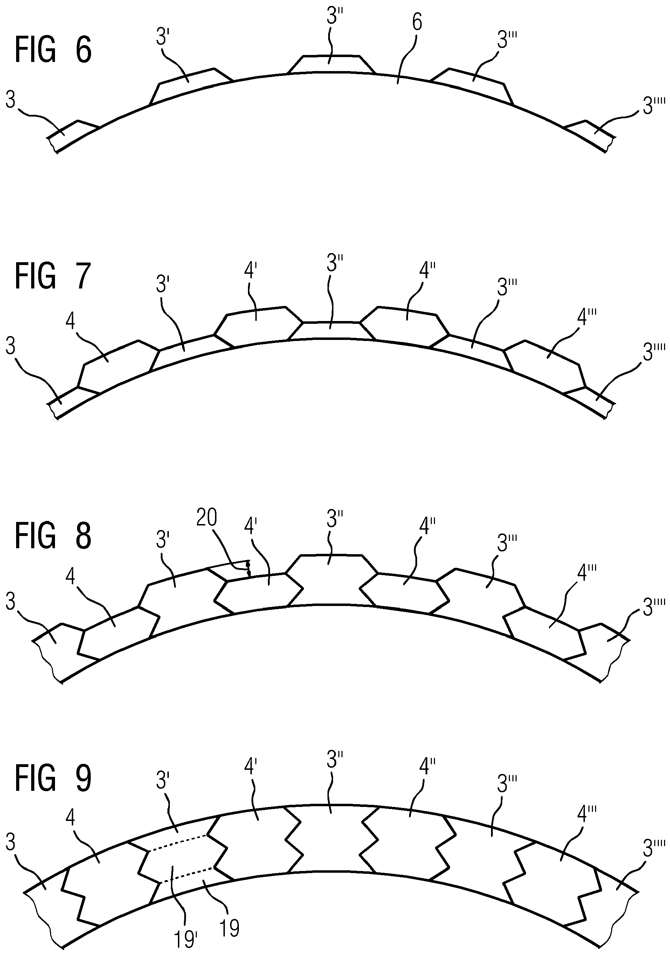

Die Darstellung gemäß der Figuren 6 bis 9 zeigt die Abfolge von Druckvorgängen. In einem ersten Schritt wird eine Schicht der elektrischen Leiter 3,3*'*,3*"*,3*'''* auf den Wellenkörper 6 gedruckt. Diese elektrischen Leiter sind voneinander beabstandet. In einem nachfolgenden Schritt werden Schichten der Zwischenkörper 4,4*'*,4*"*,4*'''* gedruckt, wobei sich diese radial nach außen über die erste Schicht der elektrischen Leiter ergeben. Gemäß Figur 8 werden in einem weiteren Schritt dann wieder die elektrischen Leiter schichtweise gedruckt, sodass sich auch diese radial nach außen über die Zwischenkörper erheben. Somit ergeben sich Stufen 20. In weiteren Schritten, welche in Figur 9 gezeigt sind, werden dann zunächst die Zwischenkörper weiter radial nach außen gedruckt bis dann anschließend die elektrischen Leiter derart nach außen gedruckt werden, dass es keine Stufen mehr gibt. Durch dieses schrittweise Vorgehen bilden sich Schichten 19, 19*'* aus.

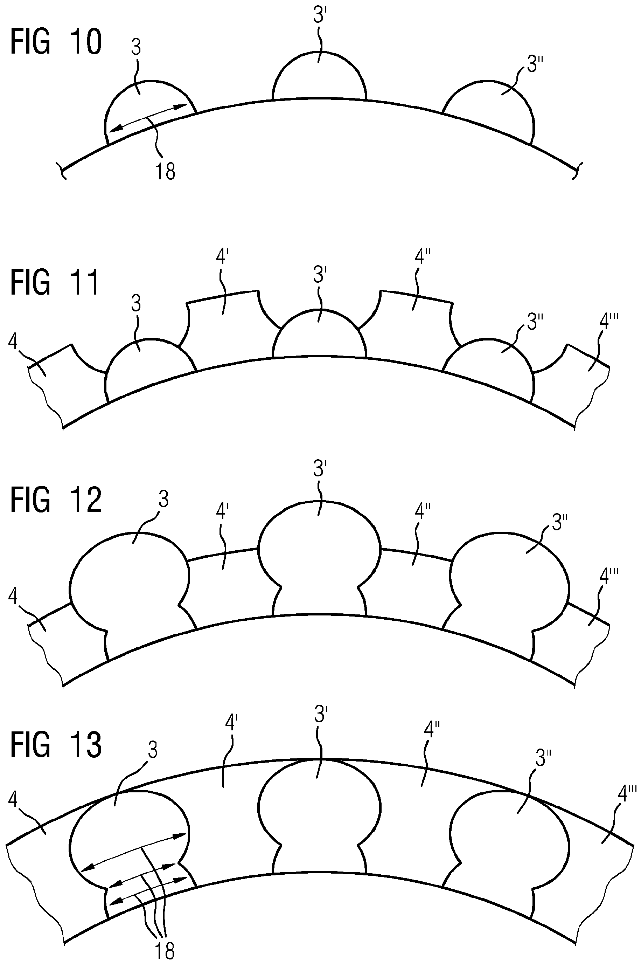

Die Darstellung gemäß der Figuren 10 bis 13 zeigt die Abfolge von Druckvorgängen, entsprechend der bereits in den Figuren 6 bis 9 gezeigten Abfolge. Im Unterschied dazu haben die elektrischen Leiter eine rundliche Form und geben wieder wie elektrische Leiter und Zwischenkörper durch ihre Form miteinander verbunden werden können, um Fliehkräfte aufzunehmen. Dabei ist gezeigt, dass sich auch hier die Breite 18 eines ausgebildeten elektrischen Leiters radial nach außen abwechselnd ändert, also einmal größer wird dann wieder kleiner und wieder größer bzw. umgekehrt.

## Patentansprüche

1. Aktivteil (1) einer elektrischen Maschine (10), welches elektrische Leiter (3,3*'*,3*"*,3*'''*) aufweist, wobei die elektrischen Leiter (3,3*'*,3*"*,3*'''*) gedruckt sind, wobei zwischen den elektrischen Leitern (3,3*'*,3*"*,3*'''*) ein Zwischenkörper (4,4*'*,4*"*,4*'''*) ist.

2. Aktivteil (1) nach Anspruch 1, wobei zumindest einer der elektrischen Leiter (3,3*'*,3*"*,3*'''*) in einem Abschnitt einen Querschnitt aufweist, welcher sich mit zunehmendem Radius verjüngt.

3. Aktivteil (1) nach Anspruch 1 oder 2, wobei zumindest einer der elektrischen Leiter (3,3*'*,3*"*,3*'''*) eine Vielzahl von Abschnitten mit Querschnitten aufweist, welche sich mit zunehmendem Radius verjüngen.

4. Aktivteil (1) nach einem der Ansprüche 1 bis 3, zwischen zumindest einem der gedruckten elektrischen Leiter (3,3*'*,3*"*,3*'''*) und dem gedruckten Zwischenkörper (4,4*'*,4*"*,4*'''*) eine dreidimensionale Struktur (5) ausgebildet ist.

5. Aktivteil (1) nach Anspruch 4, wobei die dreidimensionale Struktur (5) in einem Querschnitt ein Zackenmuster (16,16*'*) oder ein Wellenmuster aufweist.

6. Aktivteil (1) nach einem der Ansprüche 1 bis 5, wobei die elektrische Leitfähigkeit der elektrischen Leiter (3,3*'*,3*"*,3*'''*) radial differiert.

7. Aktivteil (1) nach einem der Ansprüche 1 bis 6, weisen die elektrischen Leiter (3,3*'*,3*"*,3*'''*) und/oder die insbesondere gedruckten Zwischenkörper (4,4*'*,4*"*,4*'''*) zwischen zwei der elektrischen Leiter (3,3*'*,3*"*,3*'''*), Schichten (6,7,8,9) auf, welche radial dort enden bzw. beginnen, an welchen die Dicke (10,11) eines der elektrischen Leiter, bzw. Zwischenkörper (4,4*'*,4*"*,4*'''*) ein lokales Minimum oder Maximum aufweist.

8. Verfahren zur Herstellung eines Aktivteils (1) einer elektrischen Maschine, wobei elektrische Leiter (3,3*'*,3*"*,3*'''*) gedruckt werden, wobei zwischen elektrischen Leitern (3,3*'*,3*"*,3*'''*) ein Zwischenkörper (4,4*'*,4*"*,4*'''*) gedruckt wird, wobei zwischen dem Druck zumindest eines elektrischen Leiters (3,3*'*,3*"*,3*'''*) und eines Zwischenkörper (4,4*'*,4*"*,4*'''*) abgewechselt wird.

9. Verfahren nach Anspruch 8, wobei in einem Verfahrensschritt ein erster elektrischer Leiter (3*'*) und ein zweiter benachbarter elektrischer Leiter (3*"*) gedruckt werden, wobei deren Breite abnimmt, wobei in einem nachfolgenden Verfahrensschritt der Zwischenkörper zwischen dem ersten elektrischen Leiter (3*'*) und dem zweiten elektrischen Leiter (3*"*) gedruckt wird, wobei dessen Breite zunimmt.

10. Verfahren nach Anspruch 8 oder 9, wobei die elektrischen Leiter (3,3*'*,3*"*,3*'''*) und/oder die Zwischenkörper (4,4*'*,4*"*,4*'''*) auf eine Wellenkörper (6) gedruckt werden.

11. Verfahren nach einem der Ansprüche 8 bis 10, wobei zwischen einem Druck zumindest eines Teils eines der elektrischen Leiter (3,3*'*,3*"*,3*'''*), welche ein erster Druckgegenstand sind und dem Druck zumindest eines Teils der Zwischenkörper (4,4*'*,4*"*,4*'''*), welche ein zweiter Druckgegenstand sind, derart abgewechselt wird, das sich vor einem Wechsel ein radialer Dickenzuwachs des elektrischen Leiters (3,3*'*,3*"*,3*'''*) oder des Zwischenkörpers (4,4*'*,4*"*,4*'''*) ergibt der zwischen größer gleich 50 % und kleiner gleich 200 % des darauf folgenden radialen Dickenzuwachses des jeweils anderen Druckgegenstandes ist.

12. Verfahren nach einem der Ansprüche 8 bis 11, wobei ein Aktivteil (1) nach einem der Ansprüche 1 bis 7 hergestellt wird.
